# EUROPÄISCHE PATENTSCHRIFT

(11) **EP 3 650 313 B1**
(45) Veröffentlichungstag und Bekanntmachung des Hinweises auf die Patenterteilung: **13.10.2021**
(21) Anmeldenummer: 18205215.9
(22) Anmeldetag: 08.11.2018
(51) Int. Cl.: B62D 7/18

(54) **ACHSSCHENKEL**
STEERING KNUCKLE
FUSÉE D'ESSIEU

(43) Veröffentlichungstag der Anmeldung: 13.05.2020
(73) Patentinhaber: GF Casting Solutions Kunshan Co. Ltd., Kunshan City 215300 (CN)
(72) Erfinder: Hartmann, Stephan, 78244 Gottmadingen (DE); Kupferschmid, Roger, 8261 Hemishofen (CH); Mahnig, Dominik, 8200 Schaffhausen (CH)
(74) Vertreter: Fenner, Seraina

(56) Entgegenhaltungen:
- WO-A1-2012/174185
- CN-U- 203 460 926
- DE-A1-102008 000 058

## Beschreibung

Die Erfindung betrifft einen Achsschenkel für Fahrzeuge, insbesondere für Nutzfahrzeuge beinhaltend einen Achszapfen, eine Achsfaustaufnahme, wobei die Achsfaustaufnahme eine Achsschenkelwandung aufweist an der der Achszapfen angeordnet ist und an der gegenüberliegenden Seite eine untere und obere Achsfaustaufnahme angeordnet sind, wobei die untere und obere Achsfaustaufnahme jeweils eine Bohrung zur Aufnahme eines Achsschenkelbolzens aufweist, wobei die Bohrungen konzentrisch zueinander verlaufen.

Achsschenkel sind hohen Belastungen unterworfen, speziell der Achszapfen neigt gerne zu ungewollten Schwingungen. Aufgrund des engen Bauraums sind jedoch kaum Verstärkungen anbringbar. Um den hohen Anforderungen zu genügen sind deshalb Achsschenkel meist als Schmiedeteile ausgebildet da diese den hohen Anforderungen standhalten und höheren Belastungen unterzogen werden können als beispielsweise Gussteile.

Die EP 0 201 965 B1 offenbart eine Achsschenkelanordnung, wobei die Lageroberfläche zwischen Achsschenkelbolzen und Achsschenkel vergrössert ist um die auftretende Belastung besser zu verteilen. Das Dokument WO2012174185 offenbart einen Achsschenkel gemäß dem Oberbegriff des Anspruchs 1.

Es ist Aufgabe der Erfindung einen Achsschenkel vorzuschlagen der höheren Belastungen stand hält und die Schwingfestigkeit am Achszapfen verbessert wird.

Diese Aufgabe wird erfindungsgemäss dadurch gelöst, dass der Querschnitt der Achsschenkelwandung die schmalste Querschnittsbreite auf der Höhe der Mittelachse Achszapfen aufweist und sich die Querschnittsbreite der Achsschenkelwandung mit Entfernung zur Mittelachse Achszapfen verbreitert.

Der erfindungsgemässe Achsschenkel für Fahrzeuge, insbesondere für Nutzfahrzeuge beinhaltend einen Achszapfen und eine Achsfaustaufnahme, wobei der Achsschenkel einteilig ausgebildet ist vorzugsweise als Gussteil. Die Achsfaustaufnahme weist eine Achsschenkelwandung auf an der der Achszapfen auf der einen Seite angeordnet ist. Auf der gegenüberliegenden Seite der Achsschenkelwandung sind eine untere und obere Achsfaustaufnahme angeordnet. Die untere und obere Achsfaustanordnung weisen jeweils eine Bohrung zur Aufnahme eines Achsschenkelbolzens auf, wobei die Bohrungen konzentrisch zueinander angeordnet sind. Der Querschnitt der Achsschenkelwandung weist die schmalste Querschnittsbreite auf der Höhe der Mittelachse Achszapfen auf, wobei sich die Querschnittsbreite der Achsschenkelwandung mit Entfernung zur Mittelachse Achszapfen verbreitert, vorzugsweise über die Querschnittslänge der Achsschenkelwandung. Die Verbreiterung des Querschnitts findet vorzugsweise ausschliesslich innenseitig der Achsschenkelwandung statt. Durch die erfindungsgemässe Ausgestaltung des Achsschenkels bzw. der Achsschenkelwandung wird eine höhere Belastbarkeit des Achsschenkels bzw. eine höhere Schwingfestigkeit des Achszapfens erreicht trotz dem begrenzten Bauraum der zur Verfügung steht.

Vorzugsweise erstreckt sich die Verbreiterung der Querschnittsbreite über die Querschnittslänge der Achsschenkelwandung, wobei die schmalste Querschnittsbreite in der Mitte der Querschnittslänge der Achsschenkelwandung ist und ausgehend von der Mitte eine vorzugsweise auf beide Seiten identische Verbreiterung der Querschnittsbreite erfolgt. Es ist vorteilhaft, wenn sich die Verbreiterung konstant verhält.

Als bevorzugte Ausführungsform hat sich gezeigt, wenn die Achsschenkelwandung innenseitig einen Radius aufweist der konkav verläuft. Dies ermöglicht eine optimale Ausnutzung des vorhandenen Platzes zur Vorsehung einer Verstärkung der Achsschenkelwandung.

Gemäss einer bevorzugten Ausgestaltung hat sich gezeigt, dass die breiteste Querschnittsbreite der Achsschenkelwandung mindestens 1.5mal breiter ist als die schmalste Querschnittsbreite der Achsschenkelwandung. Die schmalste Querschnittsbreite befindet sich in der Mitte der Querschnittslänge bzw. ist auf der Höhe der Mittelachse Achszapfen angeordnet.

Erfindungsgemäß erstreckt sich der Querschnitt der Achsschenkelwandung zwischen der oberen und unteren Achsfaustaufnahme, wobei sich eine Nut entlang der Achsschenkelwandung innenseitig erstreckt. Der sich ersteckende Querschnitt der Achsschenkelwandung mit der schmalsten Querschnittsbreite in der Mitte und sich in beide Richtungen verbreiternde Querschnittsbreite über die Querschnittslänge erstreckt sich zwischen der oberen und unteren Achsfaustaufnahme und bildet dadurch einseitig der Achsschenkelwandung eine Nut.

Der Achsschenkel ist vorzugsweise als Gussteil ausgebildet.

Als weitere vorteilhafte Ausgestaltung ist der Achsschenkel als Eisengussteil speziell bevorzugt GJS-Gussteil oder Sibodour-Gussteil ausgebildet ist.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht eines erfindungsgemässen Achsschenkels,
- Fig. 2: eine weitere dreidimensionale Ansicht eines erfindungsgemässen Achsschenkels,
- Fig. 3: eine Seitenansicht eines erfindungsgemässen Achsschenkels und
- Fig. 4: eine Schnittansicht eines erfindungsgemässen Achsschenkels.

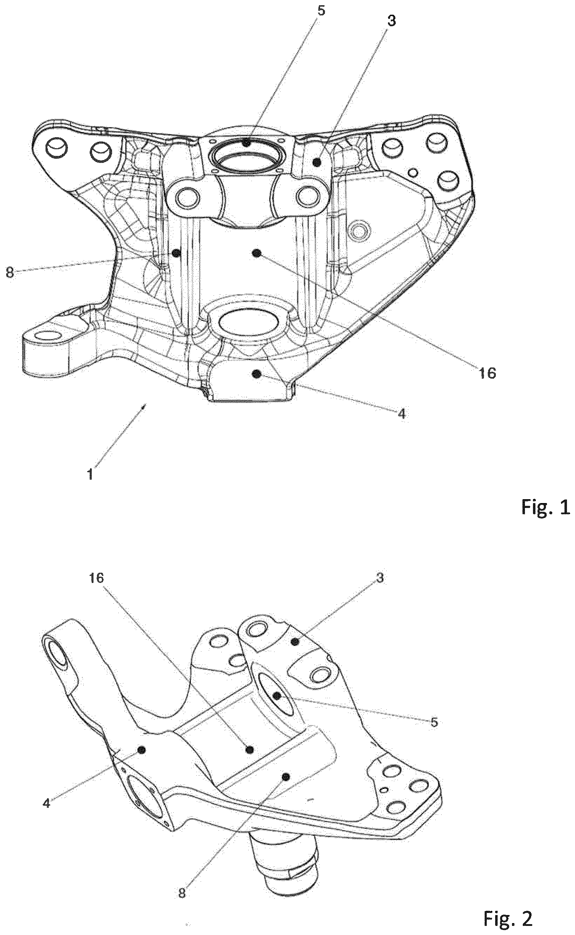

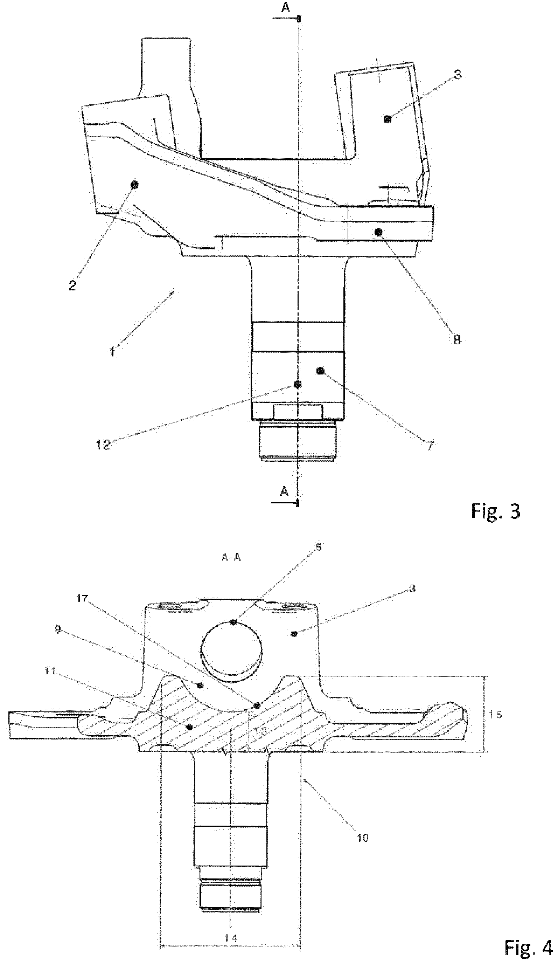

Die in Fig. 1 und 2 dargestellte Zeichnung zeigt eine dreidimensionale Ansicht eines erfindungsgemässen Achsschenkel 1 für Fahrzeuge, mit Sicht auf die Innenseite 9 des Achsschenkels 1. Der erfindungsgemässe Achsschenkel 1 weist einen Achszapfen 7 sowie eine Achsfaustaufnahme 2 auf, wobei der Achsschenkel 1 einteilig bzw. einstückig ausgebildet ist und vorzugsweise als einteiliges Gussteil hergestellt ist. Die Achsfaustaufnahme 2 beinhaltet eine Achsschenkelwandung 8 an der auf der einen Seite der Achszapfen 7 angeordnet ist und an der gegenüberliegenden Seite eine obere und untere Achsfaustaufnahme 3, 4. In den Achsfaustaufnahmen 3, 4 ist jeweils eine Bohrung 5, 6 angeordnet die zur Aufnahme des Achsschenkelbolzens (nicht dargestellt) dient. Die Achsschenkelwandung 8 weist eine Querschnittsfläche 11 auf, welche in Fig. 4 gut ersichtlich ist. Die schmalste Querschnittsbreite 13 der Achsschenkelwandung 8 befindet sich in der Mitte der Querschnittslänge 14 bzw. fluchtend zur Mittelachse Achszapfen 12. Die Querschnittsbreite verbreitert sich beidseitig ausgehend von der Mittelachse Achszapfen 12 über die Querschnittslänge 14 bis zur breitesten Querschnittsbreite Achsschenkelwandung 15. Vorzugsweise ist die Zunahme der Breite des Querschnitts der Achsschenkelwandung 8 ausgehend von der schmalsten Querschnittsbreite 13 auf beide Seiten identisch. Die Verbreiterung der Querschnittsbreite findet vorzugsweise nur gegen die Innenseite 9 der Achsschenkelwandung statt, da aufgrund der auf dem Achszapfen anzuordnenden Lagerung eine Verbreiterung nach aussen nicht möglich ist. Durch die Ausgestaltung dieser Querschnittsfläche 14 wird der beengte Bauraum optimal ausgenutzt, wobei sich dadurch eine Nut 16 entlang der Innenseite 9 der Achsschenkelwandung 8 ergibt da sich die Querschnittsfläche vorzugsweise zwischen der oberen und unteren Achsfaustaufnahme 3, 4 erstreckt. Als bevorzugte Art der Verbreiterung hat sich die Anordnung eines Radius 17 gezeigt, welcher konkav in der Achsschenkelwandung 8 angeordnet ist. Vorzugsweise verläuft die Nut 16, welche sich zwischen der oberen und unteren Achsfaustaufnahme 3, 4 erstreckt, konstant. Vorteilhaft ist es, wenn die breiteste Querschnittsbreite 15 mindestens 1.5mal breiter als die schmalste Querschnittsbreite 13 der Achsschenkelwandung 8 ist.

### Bezugszeichenliste

- 1: Achsschenkel
- 2: Achsfaustaufnahme
- 3: Obere Achsfaustaufnahme
- 4: Untere Achsfaustaufnahme
- 5: Obere Bohrung
- 6: Untere Bohrung
- 7: Achszapfen
- 8: Achsschenkelwandung
- 9: Achsschenkelwandung innenseitig
- 10: Achsschenkelwandung aussenseitig
- 11: Achsschenkelwandung Querschnittsfläche
- 12: Mittelachse Achszapfen
- 13: Schmalste Querschnittsbreite Achsschenkelwandung
- 14: Querschnittslänge
- 15: Breiteste Querschnittsbreite Achsschenkelwandung
- 16: Nut
- 17: Radius

## Patentansprüche

1. Achsschenkel (1) für Fahrzeuge, insbesondere für Nutzfahrzeuge beinhaltend einen Achszapfen (7), eine Achsfaustaufnahme (2), wobei die Achsfaustaufnahme (2) eine Achsschenkelwandung (8) aufweist an der der Achszapfen (7) angeordnet ist und an der gegenüberliegenden Seite eine untere und obere Achsfaustaufnahme (3, 4) angeordnet sind, wobei die untere und obere Achsfaustaufnahme (3, 4) jeweils eine Bohrung (5, 6) zur Aufnahme eines Achsschenkelbolzens aufweist, wobei die Bohrungen (5, 6) konzentrisch zueinander verlaufen, wobei die Querschnittsfläche (11) der Achsschenkelwandung (8) die schmalste Querschnittsbreite (13) auf der Höhe der Mittelachse Achszapfen (12) aufweist und sich die Querschnittsbreite der Achsschenkelwandung (8) mit Entfernung zur Mittelachse Achszapfen (12) verbreitert, **dadurch gekennzeichnet, dass** die Querschnittsfläche (11) der Achsschenkelwandung (8) sich zwischen der oberen Achsfaustaufnahme (3) und der unteren Achsfaustaufnahme (4) erstreckt, wobei sich eine Nut (16) entlang der Achsschenkelwandung innenseitig (9) erstreckt.

2. Achsschenkel (1) nach Anspruch 1, **dadurch gekennzeichnet, dass** sich die Verbreiterung der Querschnittsbreite über die Querschnittsläng (14) der Achsschenkelwandung (8) erstreckt, wobei die schmalste Querschnittsbreite (13) in der Mitte der Querschnittslänge (14) der Achsschenkelwandung (8) ist und ausgehend von der Mitte eine vorzugsweise auf beide Seite identische Verbreiterung der Querschnittsbreite erfolgt.

3. Achsschenkel (1) nach Anspruch 1 oder 2, **dadurch gekennzeichnet, dass** die Achsschenkelwandung (8) innenseitig einen Radius (17) aufweist der konkav verläuft.

4. Achsschenkel nach einem der Ansprüche 1 bis 3, **dadurch gekennzeichnet, dass** die breiteste Querschnittsbreite der Achsschenkelwandung mindestens 1.5mal breiter ist als die schmalste Querschnittsbreite der Achsschenkelwandung .

5. Achsschenkel (1) nach einem der Ansprüche 1 bis 4, **dadurch gekennzeichnet, dass** der Achsschenkel (1) als Gussteil ausgebildet ist.

6. Achsschenkel (1) nach einem der Ansprüche 1 bis 5, **dadurch gekennzeichnet, dass** der Achsschenkel (1) als Eisengussteil vorzugsweise GJS-Gussteil oder Sibodour-Gussteil ausgebildet ist.

## Claims

1. Steering knuckle (1) for vehicles, in particular for commercial vehicles, comprising an axle journal (7), an axle stub receptacle (2), wherein the axle stub receptacle (2) has a steering knuckle wall (8) on which the axle journal (7) is arranged and a lower and an upper axle stub receptacle (3, 4) are arranged on the opposite side, wherein the lower and the upper axle stub receptacle (3, 4) each have a bore (5, 6) for receiving a steering knuckle pin, wherein the bores (5, 6) run concentrically in relation to one another, wherein the cross-sectional area (11) of the steering knuckle wall (8) has the narrowest cross-sectional width (13) level with the centre axis of the axle journal (12) and the cross-sectional width of the steering knuckle wall (8) widens with the distance from the centre axis of the axle journal (12), **characterized in that** the cross-sectional area (11) of the steering knuckle wall (8) extends between the upper axle stub receptacle (3) and the lower axle stub receptacle (4), wherein a groove (16) extends along the inside (9) of the steering knuckle wall.

2. Steering knuckle (1) according to Claim 1, **characterized in that** the widening of the cross-sectional width extends over the cross-sectional length (14) of the steering knuckle wall (8), wherein the narrowest cross-sectional width (13) lies in the centre of the cross-sectional length (14) of the steering knuckle wall (8) and, starting from the centre, widening of the cross-sectional width, which is preferably identical on both sides, takes place.

3. Steering knuckle (1) according to Claim 1 or 2, **characterized in that** the steering knuckle wall (8) has, on the inside, a radius (17) which runs in a concave manner.

4. Steering knuckle according to one of Claims 1 to 3, **characterized in that** the widest cross-sectional width of the steering knuckle wall is at least 1.5 times wider than the narrowest cross-sectional width of the steering knuckle wall.

5. Steering knuckle (1) according to one of Claims 1 to 4, **characterized in that** the steering knuckle (1) is embodied as a cast part.

6. Steering knuckle (1) according to one of Claims 1 to 5, **characterized in that** the steering knuckle (1) is embodied as an iron cast part, preferably as a GJS cast part or as a SiboDur cast part.

## Revendications

1. Fusée d'essieu (1) destinée à des véhicules, en particulier à des véhicules utilitaires, comprenant un tourillon d'essieu (7), un logement de chape d'essieu (2), le logement de chape d'essieu (2) présentant une paroi de fusée d'essieu (8) sur laquelle le tourillon d'essieu (7) est disposé et des logements de chape d'essieu (3, 4) inférieur et supérieur étant disposés sur le côté opposé, les logements de chape d'essieu (3, 4) inférieur et supérieur présentant respectivement un alésage (5, 6) pour recevoir un boulon de fusée d'essieu, les alésages (5, 6) s'étendant de manière concentrique les uns par rapport aux autres, la superficie de la section (11) de la paroi de fusée d'essieu (8) présentant la plus petite largeur de section transversale (13) à la hauteur des tourillons d'essieu d'axe médian (12), et la largeur de section transversale de la paroi de fusée d'essieu (8) s'élargissant en s'éloignant des tourillons d'essieu d'axe médian (12),
**caractérisée en ce que** la superficie de la section (11) de la paroi de fusée d'essieu (8) s'étend entre le logement de chape d'essieu supérieur (3) et le logement de chape d'essieu inférieur (4), une rainure (16) s'étendant du côté intérieur (9) le long de la paroi de fusée d'essieu.

2. Fusée d'essieu (1) selon la revendication 1, **caractérisée en ce que** l'élargissement de la largeur de section transversale s'étend sur la longueur de section transversale (14) de la paroi de fusée d'essieu (8), la plus petite largeur de section transversale (13) se trouvant au centre de la longueur de section transversale (14) de la paroi de fusée d'essieu (8), et en partant du centre, un élargissement identique de la largeur de section transversale ayant lieu de préférence des deux côtés.

3. Fusée d'essieu (1) selon la revendication 1 ou 2, **caractérisée en ce que** la paroi de fusée d'essieu (8) présente côté intérieur un rayon (17) qui s'étend de manière concave.

4. Fusée d'essieu selon l'une quelconque des revendications 1 à 3, **caractérisée en ce que** la plus grande largeur de section transversale de la paroi de fusée d'essieu est au moins 1,5 fois plus grande que la plus petite largeur de section transversale de la paroi de fusée d'essieu.

5. Fusée d'essieu (1) selon l'une quelconque des revendications 1 à 4, **caractérisée en ce que** la fusée d'essieu (1) est réalisée sous forme de pièce coulée.

6. Fusée d'essieu (1) selon l'une quelconque des revendications 1 à 5, **caractérisée en ce que** la fusée d'essieu (1) est réalisée sous forme de pièce coulée en fonte, de préférence de pièce coulée GJS ou de pièce coulée en Sibodur.
